# EUROPÄISCHE PATENTSCHRIFT

(11) **EP 1 458 802 B1**
(45) Veröffentlichungstag und Bekanntmachung des Hinweises auf die Patenterteilung: **27.04.2005**
(21) Anmeldenummer: 02796630.8
(22) Anmeldetag: 13.12.2002
(51) Int. Cl.: C08K 5/134, C08L 23/36, C08L 35/00, C08L 75/04

(54) **STABILISATORZUSAMMENSETZUNG I**
STABILISING COMPOSITION I
COMPOSITION STABILISATRICE I

(30) Priorität: 14.12.2001 DE 10161861
(43) Veröffentlichungstag der Anmeldung: 22.09.2004
(73) Patentinhaber: BASF AKTIENGESELLSCHAFT, 67056 Ludwigshafen (DE)
(72) Erfinder: HEIDENFELDER, Thomas, 67125 Dannstadt (DE); APPEL, Manfred, 67857 Dernbach (DE)
(74) Vertreter: Reitstötter, Kinzebach & Partner (GbR) Patentanwälte
(86) Internationale Anmeldenummer: PCT/EP2002/014235
(87) Internationale Veröffentlichungsnummer: WO 2003/051975

(56) Entgegenhaltungen:
- EP-A- 0 905 181
- EP-A- 1 090 952
- DE-A- 10 105 143
- US-A- 5 710 228
- US-A- 5 821 292

## Beschreibung

Die vorliegende Erfindung betrifft eine Stabilisatorzusammensetzung sowie deren Verwendung zur Stabilisierung von unbelebtem organischen Material gegen die Einwirkung von Licht, Sauerstoff und Wärme.

Die mechanischen, chemischen und/oder ästhetischen Eigenschaften von unbelebtem organischen Material, insbesondere Kunststoffen und Lacken, werden bekanntermaßen durch die Einwirkung von Licht, Sauerstoff und Wärme verschlechtert. Diese Verschlechterung zeigt sich üblicherweise als Vergilbung, Verfärbung, Rissbildung oder Versprödung des Materials. Mit Stabilisatoren oder Stabilisatorzusammensetzungen soll ein zufriedenstellender Schutz gegen die Beeinträchtigung von organischem Material durch Licht, Sauerstoff und Wärme erzielt werden.

Sterisch gehinderte Amine (Hindered Amine Light Stabilizers; HALS) sind bekannte Stabilisatoren gegen photolytische und thermische Zersetzung von Kunststoffen. Besonders geeignete Verbindungen dieser Art sind oligomere HALS. So offenbart die DE-A-4239437 bestimmte Maleinsäureimid-α-Olefin-Copolymerisate mit Tetramethylpiperidinyl-Seitengruppen, die wirksame Stabilisatoren darstellen.

Bei den oligomeren HALS handelt es sich um Feststoffe. Es hat sich gezeigt, dass das Einarbeiten und die homogene Verteilung dieser Substanzen in z. B. Kunststoffformmassen bisweilen schwierig sind.

Die EP 0 791 032 offenbart die Verwendung von bestimmten 3-Arylacrylsäureestern als Lichtschutzmittel und Stabilisatoren für unbelebtes organisches Material. Die 3-Arylacrylsäureester können in Kombination mit sterisch gehinderten Aminen oder sterisch gehinderten Phenolen verwendet werden.

Die DE 199 48 117 offenbart eine Stabilisatorzusammensetzung, die einen 3-Arylacrylsäureester, ein sterisch gehindertes Amin, ein Chromanderivat, ein organisches Phosphit und/oder Phosphonit enthält.

Unbefriedigend ist bei derartigen Stabilisatoren oder Stabilisatorenzusammensetzungen häufig noch die geringe Verträglichkeit mit Kunststoffen sowie die geringe Dauer der Schutzwirkung. In jüngster Zeit besteht zudem ein verstärktes Interesse an phosphorfreien Stabilistorenzusammensetzungen.

Der vorliegenden Erfindung liegt die Aufgabe zugrunde, eine neue phosphorfreie Stabilisatorzusammensetzung anzugeben, die in einer Form vorliegt, die leicht in das zu stabilisierende Material eingearbeitet und homogen verteilt werden kann und eine hohe Schutzwirkung mit einer möglichst langanhaltenden Wirkung, insbesondere des Glanzerhaltes, gegen die Einwirkung von Licht, Sauerstoff und Wärme bietet. Die Stabilisatorzusammensetzung soll besonders wirksam zur Stabilisierung von Polyurethanen sein.

Erfindungsgemäß wird diese Aufgabe durch eine Stabilisatorzusammensetzung gelöst, die umfasst
A) wenigstens einen 3-Arylacrylsäureester der allgemeinen Formel I, 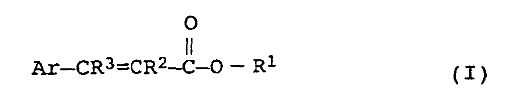 worin
   - Ar: für einen Arylrest steht, welcher zusätzlich 1, 2 oder 3 Substituenten, die unter C₁-C₄-Alkyl, C₁-C₄-Alkoxy, Hydroxy, Phenoxy, Amino, Mono- oder Di(C₁-C₄-alkyl)amino, Halogen oder Nitro ausgewählt sind, oder eine Methylendioxygruppe tragen kann,
   - R¹: für C₁-C₂₀-Alkyl, C₂-C₂₀-Alkenyl oder C₃-C₈-Cycloalkyl, das gegebenenfalls mit bis zu drei Resten ausgewählt unter Halogen, Cyano, Nitro, Amino, C₁-C₄-Alkylamino, C₁-C₄-Dialkylamino, Hydroxy, C₁-C₄-Alkyl und C₁-C₄-Alkoxy substituiert sein kann, steht,
   - R² und R³: für Wasserstoff oder C₁-C₄-Alkyl stehen,
B) wenigstens eine polymere Verbindung mit einem Molekulargewicht von wenigstens 2 000, die an einem polymeren Gerüst Seitengruppen mit Aminfunktionen trägt, worin alle Substituenten in α-Position zum Amin-Stickstoffatom von Wasserstoff verschieden sind,
C) wenigstens ein Phenol der Formel II, 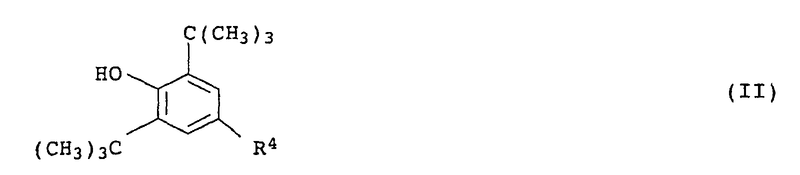
worin
- R⁴: für C₁-C₂₀-Alkoxycarbonyl-C₁-C₆-alkyl steht.

Die erfindungsgemäße Stabilisatorzusammensetzung liegt bei Raumtemperatur im Allgemeinen als viskose Flüssigkeit vor und kann daher leicht in das zu stabilisierende Material eingearbeitet und homogen verteilt werden.

Es wurde ferner gefunden, dass die Schutzwirkung der erfindungsgemäßen Stabilisatorzusammensetzung gegen die Einwirkung von Licht, Sauerstoff und Wärme höher ist, als nach den Beiträgen der Komponenten der Stabilisatorzusammensetzung zu erwarten ist. Die ausgeprägte Schutzwirkung der erfindungsgemäßen Stabilisatorzusammensetzung beruht demnach auf einem synergistischen Effekt der Komponenten.

Die erfindungsgemäße Stabilisatorzusammensetzung umfasst als Komponente A) einen 3-Arylacrylsäureester der allgemeinen Formel I.

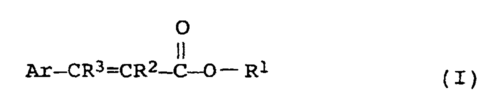

In der Formel I steht Ar z. B. für
Phenyl,
o-, m- oder p-Tolyl,
o-, m- oder p-Ethylphenyl,
o-, m- oder p-Propylphenyl,
m- oder p-Cumyl,
o-, m- oder p-Butylphenyl,
m- oder p-iso-Butylphenyl,
m- oder p-sec-Butylphenyl,
m- oder p-tert-Butylphenyl,
2,3-, 2,4-, 2,5-, 2,6-, 3,4- oder 3,5-Dimethylphenyl,
Mesityl,
o-, m- oder p-Methoxyphenyl,
o-, m- oder p-Ethoxyphenyl,
o-, m- oder p-Propoxyphenyl,
m- oder p-iso-Propoxyphenyl,
o-, m- oder p-Butoxyphenyl,
m- oder p-iso-Butoxyphenyl,
m- oder p-sec-Butoxyphenyl,
m- oder p-tert-Butoxyphenyl,
2,3-, 2,4-, 2,5-, 2,6-, 3,4- oder 3,5-Dimethoxyphenyl,
o-, m- oder p-Hydroxyphenyl,
2,3-, 2,4-, 2,5-, 2,6-, 3,4- oder 3,5-Dihydroxyphenyl,
3-Hydroxy-4-methoxyphenyl,
m- oder p-Phenoxyphenyl,
o-, m- oder p-Aminophenyl,
o-, m- oder p-(N-Methylamino)phenyl,
o-, m- oder p-(N,N-Dimethylamino)phenyl,
o-, m- oder p-Fluorphenyl,
o-, m- oder p-Chlorphenyl,
2,4-Dichlorphenyl,
o-, m- oder p-Bromphenyl,
o-, m- oder p-Nitrophenyl,
2,3- oder 3,4-Methylendioxyphenyl,
2-, 3- oder 4-Biphenyl und
α- oder β-Naphthyl.

Besonders bevorzugt sind C₁-C₄-Alkoxyphenylreste, insbesondere solche, in denen der Alkoxyrest in p-Position am Phenylkern steht.

R¹ steht für eine geradkettige oder verzweigte C₁-C₂₀-Alkylgruppe, z. B. Methyl, Ethyl, n-Propyl, iso-Propyl, n-Butyl, iso-Butyl, sec-Butyl, tert-Butyl, n-Pentyl, iso-Pentyl, sec-Pentyl, tert-Pentyl, neo-Pentyl, n-Hexyl, n-Heptyl, n-Octyl, 2-Ethylhexyl, n-Nonyl, iso-Nonyl, n-Decyl, n-Undecyl, n-Dodecyl, n-Tridecyl, iso-Tridecyl, n-Tetradecyl, n-Hexadecyl, n-Octadecyl, n-Eicosyl; oder eine geradkettige oder verzweigte C₂-C₂₀-Alkenylgruppe, z. B. Vinyl, Allyl, Methallyl, Oleyl, Linolyl oder Linolenyl; oder eine C₃-C₈-Cycloalkylgruppe wie Cyclopropyl, Cyclobutyl, Cyclopentyl, Cyclohexyl, Cycloheptyl oder Cyclooctyl. Hiervon sind geradkettige oder verzweigte C₅- bis C₁₆-Alkylgruppen, insbesondere geradkettige oder verzweigte C₈- bis C₁₂-Alkylgruppen, bevorzugt. Von besonderem Interesse sind geradkettige oder verzweigte C₈-Alkylgruppen. Unter den Cycloalkylgruppen sind Cyclopentyl und Cyclohexyl bevorzugt.

Die genannten Gruppen können mit bis zu drei unter Halogen, Cyano, Nitro, Amino, C₁-C₄-Alkylamino, C₁-C₄-Dialkylamino, Hydroxy, C₁-C₄-Alkyl oder C₁-C₄-Alkoxy ausgewählten Resten substituiert sein.

Die Reste R² und R³ bedeuten unabhängig voneinander insbesondere Wasserstoff, Methyl oder Ethyl. Ganz besonders bevorzugt steht in der allgemeinen Formel I R² für Wasserstoff oder Methyl und R³ für Wasserstoff.

Als 3-Arylacrylsäureester der allgemeinen Formel I ist 2-Ethylhexyl-p-methoxycinnamat besonders bevorzugt.

Die erfindungsgemäße Stabilisatorzusammensetzung enthält als Komponente B) eine polymere Verbindung mit einem Molekulargewicht von wenigstens 2 000, insbesondere 2 300 bis 50 000, die an einem polymeren Gerüst Seitengruppen mit Aminfunktionen trägt, worin alle Substituenten in α-Position zum Amin-Stickstoffatom von Wasserstoff verschieden sind und z. B. C₁-C₄-Alkylreste, insbesondere Methylgruppen sind. Die als Komponente B) geeignete Verbindung ist demzufolge aus aufeinanderfolgenden Wiederholungseinheiten aufgebaut, wobei jede Wiederholungseinheit einen Polymergerüstanteil und wenigstens eine Seitengruppe mit wenigstens einer Aminfunktion aufweist, worin alle Substituenten in α-Position zum Amin-Stickstoffatom von Wasserstoff verschieden sind. Die Wiederholungseinheit kann weitere Seitengruppen aufweisen, die z. B. die Kompatibilität mit dem zu stabilisierenden organischen Material verbessern. In der Regel umfasst die Komponente B) 5 bis 100, vorzugsweise 6 bis 60, Wiederholungseinheiten.

Bei der Komponenten B) handelt es sich mit Vorteil um Maleinsäureanhydrid-(Co)polymerisate, die z. B. aus 0 bis 90 Mol-% C₂-C₃₀-α-Olefineinheiten und 10 bis 100 Mol-% Maleinsäureanhydrid-Einheiten bestehen, wobei die Maleinsäureanhydrid-Einheiten ganz oder teilweise, z. B. zu mehr als 92 Mol-%, mit 4-Amino-2,2,6,6-tetramethylpiperidin oder mit 4-Amino-1,2,2,6,6-pentamethylpiperidin imidiert sind.

Besonders bevorzugt handelt es sich bei der Komponente B) um ein Maleinsäure-α-Olefin-Copolymerisat, das aus Struktureinheiten der Formel III besteht, 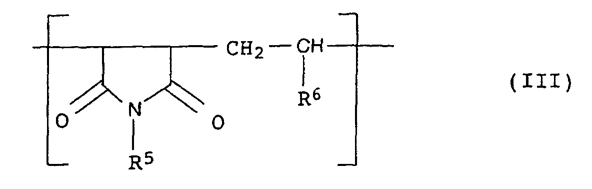 in der wenigstens 92 Mol-% der Reste R⁵ für einen Tetramethylpiperidinyl-Rest der Formel IV 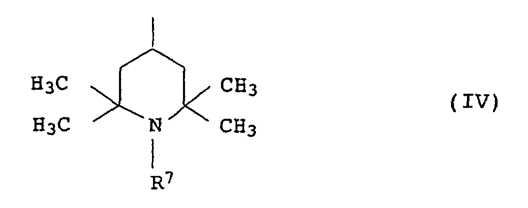 und bis zu 8 Mol-% der Reste R⁵ für Wasserstoff, C₁-C₂₂-Alkyl oder C₅-C₈-Cycloalkyl stehen,
- R⁶: für C₁₄-C₂₈-Alkyl, vorzugsweise C₁₆-C₂₄-Alkyl, insbesondere C₁₈-C₂₂-Alkyl, steht, und
- R⁷: für Wasserstoff oder C₁-C₆-Alkyl, vorzugsweise Wasserstoff, Methyl oder Ethyl, insbesondere Wasserstoff oder Methyl steht.

Der Rest R⁶ stellt vorzugsweise ein Gemisch aus C₁₄-C₂₈-Alkylgruppen, vorzugsweise C₁₆-C₂₄-Alkylgruppen, insbesondere C₁₈-C₂₂-Alkylgruppen dar. Die Auftragung des molaren Anteils der Alkylgruppen einer gegebenen Kohlenstoffanzahl an der Gesamtzahl aller Reste R⁶ der Copolymerisatmoleküle einer Probe gegen die Kohlenstoffanzahl enthält vorzugsweise wenigstens zwei Maxima, die jeweils mindestens 30, vorzugsweise jeweils mindestens 40 Mol-% ausmachen und deren zugeordnete Kohlenstoffzahlen sich um ein oder vorzugsweise zwei C-Atome unterscheiden. Es handelt sich insbesondere um Mischungen von Octadecyl, Eicosyl und Docosyl, wovon zwei dieser Gruppen, die sich um zwei Kohlenstoffatome unterscheiden, mehr als 40 Mol-% und die dritte Gruppe 3 bis 19 Mol-% des Gemisches der Reste R ausmachen.

Die Copolymerisate der Formel III können nach einem Verfahren hergestellt werden, bei dem man alternierende Maleinsäureanhydrid-α-Olefin-Copolymerisate mit 4-Amino-2,2,6,6-tetramethylpiperidinen der allgemeinen Formel V, 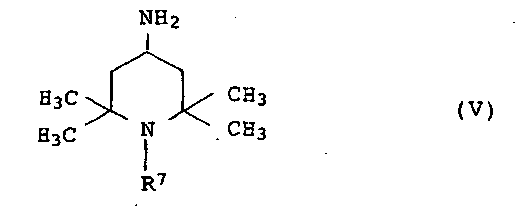 worin R⁷ die zuvor genannte Bedeutung hat, und gewünschtenfalls bis zu 8 Mol-%, bezogen auf das Copolymerisat, Ammoniak, C₁-C₂₂-Alkylamin oder C₅-C₈-Cycloalkylamin in einem organischen Lösungsmittel bei 100 bis 220 °C umsetzt. Als organische Lösungsmittel eignen sich vor allem aromatische Kohlenwasserstoffe, wie Toluol, Xylole oder Mesitylen und Halogen- oder Nitrokohlenwasserstoffe, wie Chlorbenzol, Dichlorbenzole oder Nitrobenzole. Das bei der Umsetzung gebildete Wasser kann zweckmäßigerweise azeotrop abdestilliert werden. Die als Ausgangsmaterial eingesetzten Maleinsäureanhydrid-α-Olefin-Copolymerisate sind durch Copolymerisation von Maleinsäureanhydrid mit α-Olefinen oder α-Olefin-Gemischen erhältlich, beispielsweise in Anlehnung an Houben-Weyl, Methoden der Organischen Chemie, Band E20/2, S. 1237-1248 (1987). Bezüglich bevorzugter Verbindungen, die als Komponente B) geeignet sind, wird vollinhaltlich auf die DE-A-4239437 Bezug genommen.

Die erfindungsgemäße Stabilisatorzusammensetzung enthält als Komponente C) wenigstens ein Phenol der Formel II, 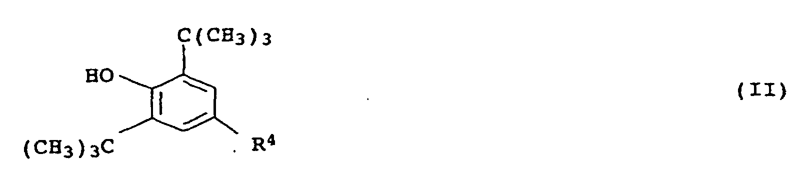 worin
- R⁴: für C₁-C₂₀-Alkoxycarbonyl-C₁-C₆-alkyl, vorzugsweise C₁-C₂₀-Alkoxycarbonyl-C₁-C₄-alkyl steht.

Hierzu eignen sich insbesondere (3,5-Di-tert.-butyl-4-hydroxyphenyl)propionsäureester von C₁-C₂₀-Alkanolen wie 3-(3,5-Di-tert.-butyl-4-hydroxyphenyl)propionsäure-i-octylester, das im Handel unter dem Namen Irganox® 1135 der Fa. Ciba-Geigy (jetzt Ciba Speciality Chemicals) erhältlich ist, 3-(3,5-Di-tert.-butyl-4-hydroxyphenyl)propionsäure-n-octadecylester, das im Handel unter dem Namen Irganox® 1076 der Fa. CibaGeigy (jetzt Ciba Speciality Chemicals) erhältlich ist. Wahlweise enthält die erfindungsgemäße Stabilisatorzusammensetzung zusätzlich wenigstens einen weiteren Lichtstabilisator, der Lichtstrahlung im UV-A- (320 bis 400 nm) und/oder UV-B-Bereich (280 bis 320 nm) absorbiert. Selbstverständlich müssen die zusätzlichen Lichtstabilisatoren mit der Stabilisatorzusammensetzung kompatibel und vorzugsweise im sichtbaren Bereich farblos sein. Als Beispiele für derartige UV-Absorber seien genannt: 2-Hydroxybenzophenone, 2-Hydroxyphenylbenzotriazole, Oxalsäuredianilide, 2-Hydroxyphenyltriazine, 4,4'-Diarylbutadiene.

Geeignete 2-Hydroxybenzophenone, von denen eine Vielzahl im Handel erhältlich sind, sind beispielsweise: 2-Hydroxy-4-dodecoxybenzophenon, 2-Hydroxy-4-methoxybenzophenon, 2,4-Dihydroxybenzophenon, 2,2'-Dihydroxy-4-methoxybenzophenon (Handelsname Cyasorb® UV 24, American Cyanamid, jetzt Cytec), 2,2'-Dihydroxy-4,4'-dimethoxybenzophenon, 2,2',4,4'-Tetrahydroxybenzophenon. Die 2-Hydroxybenzophenone zeichnen sich durch eine gute UV-Beständigkeit und ein hohes Absorptionsvermögen aus.

Geeignete 2-Hydroxyphenylbenzotriazole sind beispielsweise 2-(2'-Hydroxy-5'-methylphenyl)benzotriazol (Handelsname Tinuvin® P, Ciba-Geigy, jetzt Ciba Speciality Chemicals), 2-(2'-Hydroxy-5'-tert.-octylphenyl)benzotriazol (Handelsname Cyasorb® UV 5411), 2-(2'-Hydroxy-3'-tert.-butyl-5'-methylphenyl)benzotriazol (Handelsname Tinuvin® 326, Ciba-Geigy, jetzt Ciba Speciality Chemicals), 2-(2'-Hydxoxy-3',5'-di-tert.-butylphenyl)5-chlorbenzotriazol (Handelsname Tinuvin® 327, Ciba-Geigy, jetzt Ciba Speciality Chemicals). 2-Hydroxyphenylbenzotriazole absorbieren an der Grenze zum sichtbaren Bereich und zeigen keine Gelbfärbung.

Ein geeignetes 2-Hydroxyphenyltriazin ist beispielsweise 2,4-Bis-(2', 2'',4',4''-Tetramethylphenyl)-6-(2'''-hydroxy-4'''-octoxyphenyl)-1,3,5-triazin (Handelsname Cyasorb® 1164, American Cyanamid, jetzt Cytec).

Bevorzugte Oxalsäuredianilide sind beispielsweise: 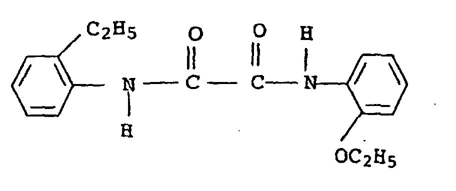 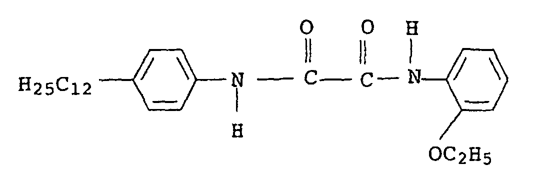 4,4'-Diarylbutadiene der Formel VI 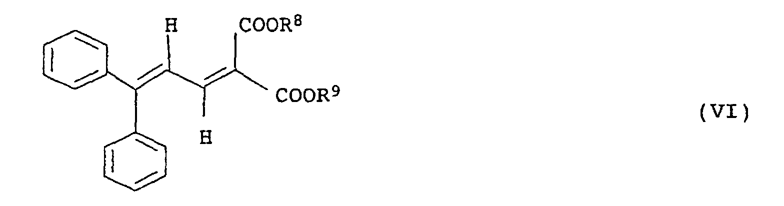 sind aus EPA 916 335 bekannt. Die Substituenten R⁸ und/oder R⁹ bedeuten bevorzugt C₁-C₈-Alkyl und C₅-C₈-Cycloalkyl.

Die erfindungsgemäße Stabilisatorzusammensetzung enthält im Allgemeinen
35 bis 45 Gewichtsteile, vorzugsweise 37 bis 43 Gewichtsteile A),
35 bis 45 Gewichtsteile, vorzugsweise 37 bis 43 Gewichtsteile B), und
15 bis 25 Gewichtsteile, vorzugsweise 17 bis 25 Gewichtsteile C).

Wird ein weiterer Lichtstabilisator mitverwendet, wird er vorzugsweise in einer Menge von 0,1 bis 15, vorzugsweise 1 bis 12, Gewichtsteilen mitverwendet.

Die erfindungsgemäße Stabilisatorzusammensetzung wird dem zu stabilisierenden organischen Material in der Regel in einer Konzentration von 0,01 bis 5 Gew.-%, vorzugsweise von 0,01 bis 2 Gew.-%, insbesondere von 0,05 bis 1 Gew.-%, bezogen auf das organische Material vor, während oder nach seiner Herstellung zugesetzt.

Unter unbelebtem organischen Material sind beispielsweise kosmetische Präparate, wie Salben und Lotionen, Arzneimittelformulierungen, wie Pillen und Zäpfchen, photographische Aufzeichnungsmaterialien, insbesondere photographische Emulsionen, Vorprodukte für Kunststoffe und Anstrichmittel, insbesondere jedoch Anstrichmittel und Kunststoffe selbst, zu verstehen.

Als Kunststoffe, die durch das erfindungsgemäße Stabilisatorgemisch stabilisiert werden können, seien beispielsweise genannt:

Polymere von Mono- oder Diolefinen, wie z. B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;

Polystyrol sowie Copolymere von Styrol oder α-Methylstyrol mit Dienen und/oder Acrylderivaten, wie z. B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS); halogenhaltige Polymere, wie z. B. Polyvinylchlorid, Polyvinylfluorid, Polyvinylidenfluorid sowie deren Copolymere;

Polymere, die sich von α,β-ungesättigten Säuren und deren Derivaten ableiten, wie Polyacrylate, Polymethacrylate, Polyacrylamide und Polyacrylnitrile;

Polymere, die sich von ungesättigten Alkoholen und Aminen bzw. von deren Acylderivaten oder Acetalen ableiten, z. B. Polyvinylalkohol und Polyvinylacetat;

Polyurethane, Polyamide, Polyharnstoffe, Polyphenylenether, Polyester, Polycarbonate, Polysulfone, Polyethersulfone und Polyetherketone.

Zu den Anstrichmitteln, die mit der erfindungsgemäßen Stabilisatorzusammensetzung stabilisiert werden können, zählen unter anderem Lacke, wie Alkydharzlacke, Dispersionslacke, Epoxydharzlacke, Polyurethanlacke, Acrylharzlacke, Cellulosenitratlacke, oder Lasuren, wie Holzschutzlasuren.

Die erfindungsgemäße Stabilisatorzusammensetzung ist besonders geeignet zur Stabilisierung von Polyurethanen, insbesondere thermoplastischen Polyurethanen. Dabei handelt es sich um überwiegend lineare Polyurethane, die, ausgehend von Diisocyanaten, wie 4,4'-Diisocyanato-diphenylmethan, und langkettigen Diolen, wie Polytetrahydrofuran oder Polyesterpolyolen, erhalten werden. Man geht in der Regel von entsprechenden Präpolymeren aus und setzt kurzkettige Diole oder Diamine als Kettenverlängerer ein; die erhaltenen Produkte sind segmentiert aufgebaut, wobei die Weichsegmente z. B. Molmassen von 1 000 bis 3 000 aufweisen und durch die Hartsegmente physikalisch vernetzt sind.

Die erfindungsgemäße Stabilisatorzusammensetzung kann auch in Form eines Masterbatches, der diese beispielsweise in einer Konzentration von 2,5 bis 25 Gew.-% enthält, hergestellt und den zu stabilisierenden Materialien zugesetzt werden.

Die unter Verwendung der erfindungsgemäßen Stabilisatorzusammensetzung stabilisierten Materialien zeigen besondere Qualitätsmerkmale bezüglich Farbänderung und Glanzhaltung gegenüber den mit der Vergleichszusammensetzung stabilisierten Materialien, d. h. ihre Schädigung durch äußere Einflüsse setzt später ein.
Glanz und Farbe sollten möglichst während der gesamten Nutzungsdauer konstant bleiben und ihr Verlust bedeutet stets einen Qualitätsverlust. Die erfindungsgemäß stabilisierten Materialien zeichnen sich somit durch eine verlängerte Beanspruchungszeit aus.

Die Erfindung wird durch die folgenden Beispiele näher veranschaulicht.

### I. Beschreibung der Testmethoden

### 1. Bestimmung des Glanzgrades nach Gardner

Die Glanzmessung erfolgte mit einem Reflektometer Gardner Micro-Gloss 60° nach DIN 67530.

### 2. Bestimmung der Farbabweichung

Vor und nach der Bewitterung wurden die CIELAB-Farbunterschiede ΔE für jede Probe aus den Tristimulus-Werten mit Hilfe der Farbabstandsformel berechnet. Die CIE-Tristimulus-Werte X, Y und Z der Proben wurden mit dem Farbmessgerät DataColor, Datacolor, ermittelt.

### II. Beispiele

### Beispiel 1

Es wurde ein Gemisch hergestellt aus

| | |
|---|---|
| 40 | Gewichtsteilen p-Methoxyzimtsäure-2-ethylhexylester, |
| 40 | Gewichtsteilen eines alternierenden N-(2,2,6,6-tetramethyl-4-piperidinyl)maleinsäureimid-C₂₀-C₂₄-α-Olefin-Copolymerisats und |
| 20 | Gewichtsteilen 3-(3,5-Di-tert.-butyl-4-hydroxyphenyl)propionsäure-i-octylester. |

Als Vergleich diente eine handelsübliche Stabilisatorzusammensetzung.

| Vergleichsbeispiel | |
|---|---|
| 60 | Gewichtsteile p-Methoxyzimtsäure-2-ethylhexylester, |
| 20 | Gewichtsteile Bis(1,2,2,6,6-pentamethylpiperidin-4-yl)sebacat und |
| 20 | Gewichtsteile eines Gemisches aus 1 Gewichtsteil α-Tocopherol und 10 Gewichtsteilen Tris(nonylphenyl)phosphit. |

### III.Prüfung der Stabilisatorwirkung

Der Stabilisator wurde in eine TPU-Reaktion zugegeben, wobei die Muster über einen Gießansatz hergestellt wurden.

In eine Probe wurden 1 Gew.-% der Stabilisatorzusammensetzung nach dem Beispiel 1 bzw. dem Vergleichsbeispiel eingearbeitet. Da bei der unstabilisierten Probe unter den Testbedingungen eine rasche Vergilbung auftrat, konnte eine Kontrolle mit der unstabilisierten Probe nicht durchgeführt werden.

Prüfkörper wurden mit einem Schnellbewetterungsgerät des Typs Weather-Ometer® der Firma Atlas Materials Testing Technology B. V., Niederlande, bewittert. In Abhängigkeit von der Bewitterungszeit wurde der Glanzgrad nach Gardner (Tabelle 1) und der Farbabstand (Tabelle 2) ermittelt. Die Ergebnisse sind in den nachstehenden Tabellen 1 und 2 angegeben.

**Tabelle 1:**

| Glanzgrad nach Gardner in Abhängigkeit von der Zeit | | | | | |
|---|---|---|---|---|---|
| | 0 [h] | 500 [h] | 1000 [h] | 1500 [h] | 2000 [h] |
| Vergleich | 27 | 38 | 40 | 30 | 2 |
| Beispiel 1 | 28 | 30 | 39 | 45 | 30 |

Wie man Tabelle 1 entnehmen kann, zeigte die mit der erfindungsgemäßen Stabilisatorzusammensetzung stabilisierte Probe nach Bewitterung über 1500 bzw. 2000 Stunden eine deutlich bessere Glanzwahrung als die mit der Vergleichszusammensetzung stabilisierte Probe.

**Tabelle 2:**

| Farbabstand ΔE - CIE in Abhängigkeit von der Zeit | | | | | |
|---|---|---|---|---|---|
| | 200 [h] | 400 [h] | 600 [h] | 800 [h] | 1000 [h] |
| Vergleich | 4,3 | 5,4 | 3,9 | 1,1 | 4,6 |
| Beispiel 1 | 2,7 | 1,7 | 1,0 | 1,6 | 3,8 |

## Patentansprüche

1. Phosphorfreie Stabilisatorzusammensetzung, umfassend
A) wenigstens einen 3-Arylacrylsäureester der allgemeinen Formel I, 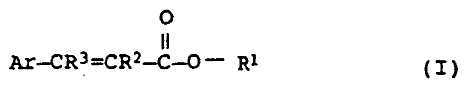 worin
Ar für einen Arylrest steht, welcher zusätzlich 1, 2 oder 3 Substituenten, die unter C₁-C₄-Alkyl, C₁-C₄-Alkoxy, Hydroxy, Phenoxy, Amino, Mono- oder Di(C₁-C₄-alkyl)amino, Halogen oder Nitro ausgewählt sind, oder eine Methylendioxygruppe tragen kann,
R¹ für C₁-C₂₀-Alkyl, C₂-C₂₀-Alkenyl oder C₃-C₈-Cycloalkyl, das gegebenenfalls mit bis zu drei Resten ausgewählt unter Halogen, Cyano, Nitro, Amino, C₁-C₄-Alkylamino, C₁-C₄-Dialkylamino, Hydroxy, C₁-C₄-Alkyl und C₁-C₄-Alkoxy substituiert sein kann, steht,
R² und R³ für Wasserstoff oder C₁-C₄-Alkyl stehen,
B) wenigstens eine polymere Verbindung mit einem Molekulargewicht von wenigstens 2 000, die 5 bis 100 Wiederholungseinheiten umfaßt, wobei jede Wieder-holeinheit einem Polymer gerüst anteil und wenigstens eine Seiten gruppe mit wenigstens eines Aminofunktion aufweist, worin alle Substituenten in α-Position zum Amin-Stickstoffatom von Wasserstoff verschieden sind,
C) wenigstens ein Phenol der Formel II, 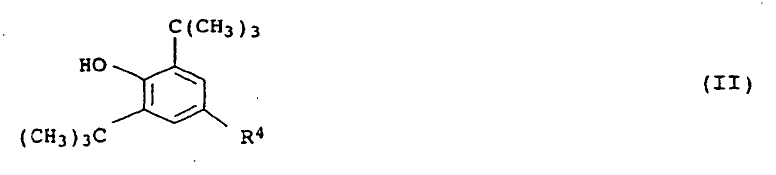 worin
R⁴ für C₁-C₂₀-Alkoxycarbonyl-C₁-C₆-alkyl steht.

2. Stabilisatorzusammensetzung nach Anspruch 1, wobei die Komponente A) 2-Ethylhexyl-p-methoxycinnamat ist.

3. Stabilisatorzusammensetzung nach Anspruch 1 oder 2, wobei es sich bei der polymeren Verbindung B) um ein Maleinsäure-α-Olefin-Copolymerisat handelt, das aus Struktureinheiten der Formel III besteht, 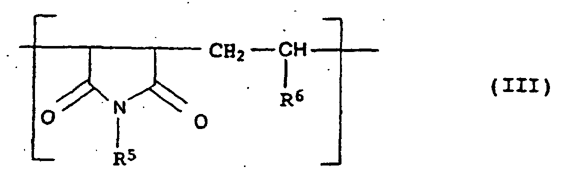 worin
R⁵ für einen Tetramethylpiperidinyl-Rest der Formel IV steht, 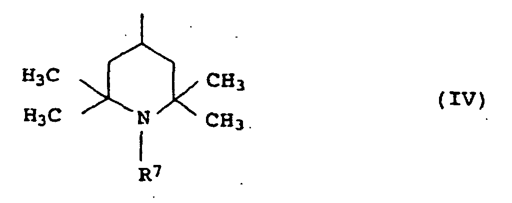
R⁶ für C₁₄-C₂₈-Alkyl steht und
R⁷ für Wasserstoff oder C₁-C₆-Alkyl steht.

4. Stabilisatorzusammensetzung nach einem der vorherigen Ansprüche, wobei R⁷ für Wasserstoff oder Methyl steht.

5. Stabilisatorzusammensetzung nach einem der vorherigen Ansprüche, wobei die Komponente C) 3-(3,5-Di-tert.-butyl-4-hydroxyphenyl)propionsäure-i-octylester ist.

6. Stabilisatorzusammensetzung nach einem der vorhergehenden Ansprüche, zusätzlich umfassend wenigstens einen weiteren Lichtstabilisator.

7. Verwendung der Stabilisatorzusammensetzung nach einem der vorhergehenden Ansprüche zur Stabilisierung von unbelebtem organischen Material gegen die Einwirkung von Licht, Sauerstoff und Wärme.

8. Verwendung nach Anspruch 7 zur Stabilisierung von Kunststoffen.

9. Verwendung nach Anspruch 8 zur Stabilisierung von Polyurethanen, insbesondere thermoplastischen Polyurethanen.

10. Thermoplastische Formmasse, umfassend wenigstens eine Stabilisatorzusammensetzung nach einem der Ansprüche 1 bis 6.

## Claims

1. A phosphorus-free stabilizer composition comprising
A) at least one 3-arylacrylate of the formula I 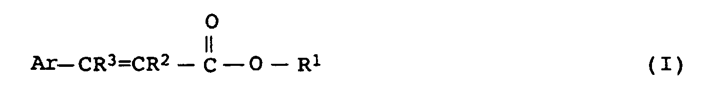 where
Ar is an aryl radical which may also bear 1, 2 or 3 substituents selected from the group consisting of C₁-C₄-alkyl, C₁-C₄-alkoxy, hydroxy, phenoxy, amino, mono- or di(C₁-C₄-alkyl)amino, halogen, or nitro, or may bear a methylenedioxy group,
R¹ is C₁-C₂₀-alkyl, C₂-C₂₀-alkenyl, or C₃-C₈-cycloalkyl, where appropriate substituted by up to three radicals selected from the class consisting of halogen, cyano, nitro, amino, C₁-C₄-alkylamino, C₁-C₄-dialkylamino, hydroxy, C₁-C₄-alkyl, and C₁-C₄-alkoxy,
R² and R³ are hydrogen or C₁-C₄-alkyl,
B) at least one polymeric compound with molecular weight at least 2 000, which encompasses from 5 to 100 repeat units, each repeat unit having a polymer framework fraction and at least one side group having at least one amino function, where all of the substituents in the α-position to the amine nitrogen atom are other than hydrogen,
C) at least one phenol of the formula II 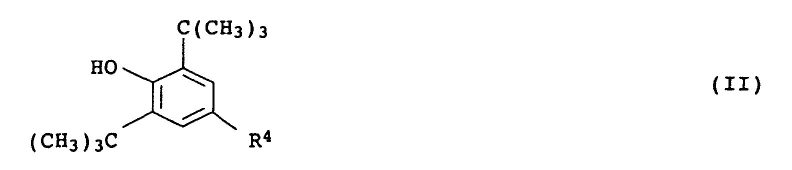
where
R⁴ is C₁-C₂₀-alkoxycarbonyl-C₁-C₆-alkyl.

2. A stabilizer composition as claimed in claim 1, where component A) is 2-ethylhexyl p-methoxycinnamate.

3. A stabilizer composition as claimed in claim 1 or 2, where the polymeric compound B) is a maleic acid-α-olefin copolymer composed of structural units of the formula III, 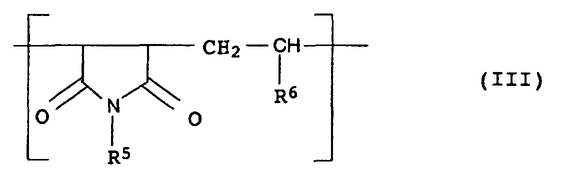 where
R⁵ is a tetramethylpiperidinyl radical of the formula IV, 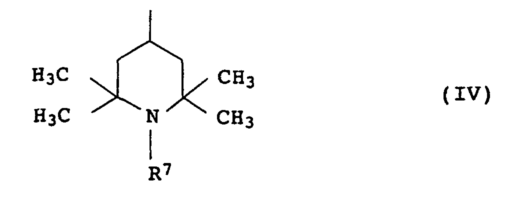
R⁶ is C₁₄-C₂₈-alkyl, and
R⁷ is hydrogen or C₁-C₆-alkyl.

4. A stabilizer composition as claimed in any of the preceding claims, where R⁷ is hydrogen or methyl.

5. A stabilizer composition as claimed in any of the preceding claims, where component C) is isooctyl 3-(3,5-di-tert-butyl-4-hydroxyphenyl)propionate.

6. A stabilizer composition as claimed in any of the preceding claims, also encompassing at least one other light stabilizer.

7. The use of the stabilizer composition as claimed in any of the preceding claims for stabilizing non-living organic material with respect to exposure to light, oxygen, and heat.

8. The use as claimed in claim 7 for stabilizing plastics.

9. The use as claimed in claim 8 for stabilizing polyurethanes, in particular thermoplastic polyurethanes.

10. A thermoplastic molding composition comprising at least one stabilizer composition as claimed in any of claims 1 to 6.

## Revendications

1. Composition stabilisatrice exempte de phosphore, comprenant
A) au moins un ester d'acide 3-arylacrylique de la formule générale I : 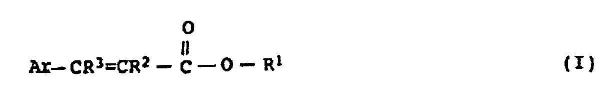 dans laquelle
Ar représente un radical aryle qui, en supplément, peut porter 1, 2 ou 3 substituants, qui sont choisis parmi les groupes alkyle en C₁-C₄, alcoxy en C₁-C₄, hydroxy, phénoxy, amino, mono- ou di-(alkyle en C₁-C₄-)amino, halogène ou nitro, ou un groupe méthylènedioxy,
R¹ représente un groupe alkyle en C₁-C₂₀, alcényle en C₂-C₂₀ ou cycloalkyle en C₃-C₈, qui peut éventuellement être substitué par jusqu'à trois radicaux choisis parmi de l'halogène ou un groupe cyano, nitro, amino, alkylamino en C₁-C₄, dialkylamino en C₁-C₄, hydroxy, alkyle en C₁-C₄ et alcoxy en C₁-C₄,
R² et R³ représentent de l'hydrogène ou un alkyle en C₁-C₄,
B) au moins un composé polymère présentant un poids moléculaire d'au moins 2000, qui comporte 5 à 100 unités répétitives, chaque unité répétitive présentant une fraction de squelette de polymère et au moins un groupe latéral comportant au moins une fonction amino, tous les substituants en position α par rapport à l'atome d'azote d'amine étant différents de l'hydrogène,
C) au moins un phénol de la formule II : 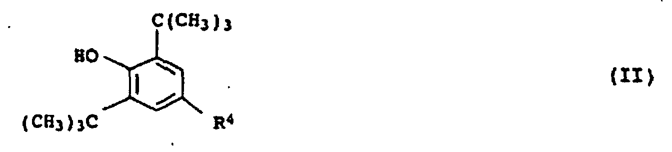
dans laquelle
R⁴ représente un C₁-C₂₀-alcoxycarbonyl-C₁-C₆-alkyle.

2. Composition stabilisatrice suivant la revendication 1, dans laquelle le composant A) est du p-méthoxycinnamate de 2-éthylhexyle.

3. Composition stabilisatrice suivant la revendication 1 ou 2, dans laquelle, pour ce qui concerne le composé polymère B), il s'agit d'un copolymère d'acide maléique-α-oléfine qui est constitué d'unités structurelles de la formule III : 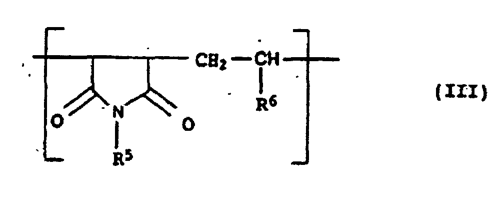 où
R⁵ représente un radical tétraméthylpipéridinyle de la formule IV : 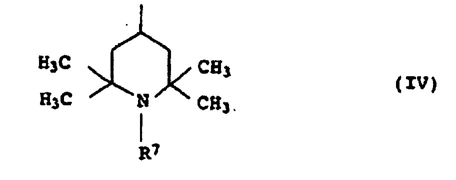
R⁶ représente un alkyle en C₁₄-C₂₈, et
R⁷ représente de l'hydrogène ou un alkyle en C₁-C₆.

4. Composition stabilisatrice suivant l'une des revendications précédentes, dans laquelle R⁷ représente de l'hydrogène ou du méthyle.

5. Composition stabilisatrice suivant l'une des revendications précédentes, dans laquelle le composant C) est du 3-(3,5-di-tert-butyl-4-hydroxyphényl)propionate de i-octyle.

6. Composition stabilisatrice suivant l'une des revendications précédentes, comportant en supplément au moins un autre stabilisant à la lumière.

7. Utilisation de la composition stabilisatrice suivant l'une des revendications précédentes, pour la stabilisation de matière organique inanimée vis-à-vis de l'action de la lumière, de l'oxygène et de la chaleur.

8. Utilisation suivant la revendication 7, pour la stabilisation de substances synthétiques.

9. Utilisation suivant la revendication 8, pour la stabilisation de polyuréthannes, en particulier de polyuréthannes thermoplastiques.

10. Masse de moulage thermoplastique, comportant au moins une composition stabilisatrice suivant l'une des revendications 1 à 6.
